# EUROPÄISCHE PATENTSCHRIFT

(11) **EP 1 859 887 B1**
(45) Veröffentlichungstag und Bekanntmachung des Hinweises auf die Patenterteilung: **16.03.2011**
(21) Anmeldenummer: 07008559.2
(22) Anmeldetag: 26.04.2007
(51) Int. Cl.: B23K 3/06, B23K 1/08

(54) **Vorrichtung und Verfahren zum Wellenlöten**
Device and method for wave soldering
Appareil et méthode de brasage à la vague

(30) Priorität: 23.05.2006 DE 102006024192; 27.07.2006 EP 06015706
(43) Veröffentlichungstag der Anmeldung: 28.11.2007
(73) Patentinhaber: Linde AG, 80331 München (DE)
(72) Erfinder: Mästele, Johann, 88489 Wain (DE); Wandke, Ernst, Dr., 82538 Geretsried (DE)
(74) Vertreter: Gellner, Bernd

(56) Entgegenhaltungen:
- WO-A-92/10323
- DE-B4- 19 541 445
- US-A- 5 121 875
- US-A- 5 358 167

## Beschreibung

Die vorliegende Erfindung betrifft eine Vorrichtung zum Wellenlöten von Werkstücken, die Mittel zum Bewegen des der Lötbehandlung zu unterziehenden Werkstücks entlang einer bestimmten Bahn über mindestens eine über einem Lotreservoir erzeugte Lötwelle aufweist, wobei sich über dem Lotreservoir eine Schutz- und/oder Aktivgasatmosphäre einer ersten Zusammensetzung unter weitgehendem Ausschluss von Sauerstoff befindet, und wobei Mittel zum Einbringen des Schutz- und/oder Aktivgases sowie eine Einhausung vorgesehen sind, wobei die Einhausung so ausgebildet ist, dass sie zumindest die wesentlichen Teile einer Lötzone, nämlich die Lötwelle und das Lotreservoir, zumindest zum Teil einhaust und wobei die Einhausung so ausgebildet ist und die Bahn so verläuft, dass zumindest ein Teil des Werkstücks zumindest mit einem Teil der Lötwelle in Berührung kommt. Desweiteren betrifft die vorliegende Erfindung ein Verfahren zum Wellenlöten von Werkstücken, wobei das der Lötbehandlung zu unterziehende Werkstück entlang einer bestimmten Bahn über mindestens eine über einem Lotreservoir erzeugte Lötwelle bewegt wird, wobei über dem Lotreservoir eine Schutz- und/oder Aktivgasatmosphäre einer ersten Zusammensetzung unter weitgehendem Ausschluss von Sauerstoff ausgebildet wird und wobei das eingebrachte Schutz- und/oder Aktivgas sowie zumindest das Lotreservoir und die Lötwelle als wesentliche Teile der Lötzone von einer Einhausung zumindest zum Teil so abgeschirmt werden und die Bahn des Werkstücks so geführt wird, dass zumindest ein Teil des Werkstücks zumindest mit einem Teil der Lötwelle in Berührung kommt

Die bekannten Anlagen zum Wellenlöten unter Schutzgasatmosphäre können im Wesentlichen in zwei Kategorien unterteilt werden. Es gibt sogenannte Tunnelmaschinen und Atmosphärenlötmaschinen, die häufig partiell im Lötbereich mit einer Abdeckung versehen sind.

Das Löten unter Schutzgasatmosphäre weist bekanntermaßen viele Vorteile auf. Es seien hier nur einige wenige genannt. Beipielsweise ermöglicht die Schutzgasatmosphäre eine z.T. erhebliche Reduzierung des benötigten Flussmittels. Die Schutzgasatmosphäre, die in der Regel inert ist und so einen weitgehenden Ausschluß von Sauerstoff aus der den Lötvorgang umgebenden Atmosphäre zu Folge hat, verhindert oxidative Vorgänge.

Das Wellenlöten unter Schutzgasatmosphäre in einer Tunnelmaschine erzeugt bekanntlich ein sehr gutes Lötergebnis, erfordert jedoch in der Regel große Mengen an Schutzgas, so dass vergleichsweise hohe Betriebskosten entstehen. Dabei findet sowohl das Vorwärmen der Werkstücke, der eigentliche Lötvorgang und eine anschließende Abkühlung unter Schutzgasatmosphäre statt.

Das Löten unter Schutzgas in einer Atmosphärenlötmaschinen mit einer teilweisen Abdeckung über dem eigentlichen Lötbereich ermöglicht nur einen Teil der Vorteile verglichen mit einer Tunnelmaschine, wobei die Betriebskosten durch einen deutlich reduzierten Inertgasverbrauch erheblich gesenkt werden können. Eine derartige Maschine ist beispielsweise in der Druckschrift DE 195 41 445 B4 und in der Druckschrift US-A-5 121 875, dass als nächstliegenden Stand der Technik angesehen wird, beschrieben.

Aufgabe der vorliegenden Erfindung ist es eine verbesserte Vorrichtung zum Wellenlöten zur Verfügung zu stellen, die hinsichtlich des Verbrauchs an Schutzgas und der Einwirkmöglichkeiten durch das Schutzgas auf das Werkstück optimiert ist. Desweiteren ist es Aufgabe der vorliegende Erfindung ein entsprechendes, verbessertes Verfahren anzugeben.

Vorrichtungsseitig wird die gestellte Aufgabe dadurch gelöst, dass zusätzlich zu der Lötzone zumindest noch eine weitere Zone vorgesehen ist, in der das Werkstück sich vor oder nach der Lötbehandlung zumindest für kurze Zeit befindet, wobei ein Gehäuse vorgesehen ist, das die Einhausung und mindestens eine weitere Zone umgibt, und Mittel zum Einbringen einer Schutz- und/oder Aktivgasatmosphäre einer zweiten Zusammensetzung in das Gehäuse vorgesehen sind, wobei die Einhausung die Schutz- und/oder Aktivgasatmosphäre der ersten Zusammensetzung umgibt und die Schutz- und/oder Aktivgasatmosphäre der zweiten Zusammensetzung die Einhausung umgibt sowie das Gehäuse die Einhausung und die Schutz- und/oder Aktivgasatmosphäre der zweiten Zusammensetzung umgibt. Durch diese Ausgestaltung wird in der Vorrichtung eine Lötzone mit einer eigenen Schutzgasatmosphäre geschaffen, wobei die Schutzgasatmosphäre der Lötzone (erste Schutzgasatmosphäre) vorteilhaft nicht direkt an die Umgebungsluft angrenzt, sondern z.B. im Bereich der Öffnungen für die Mittel zum Bewegen des Werkstücks lediglich in Kontakt mit der zweiten Schutzgasatmosphäre kommt. Die weitere Zone kann beispielsweise der Vorwärmung des Werkstücks dienen. Desweiteren kann noch eine weitere Zone der Abkühlung des Werkstücks nach erfolgtem Lötvorgang dienen. Häufig wird jedoch auch ein separater Abkühlbereich der erfindungsgemäßen Vorrichtung nachgeschaltet. In diesem Fall weist die Vorrichtung in der Regel lediglich eine weitere Zone auf. Die Möglichkeit in den einzelnen Zonen Schutz- und/oder Aktivgasatmosphären mit unterschiedlicher Zusammensetzung zu verwenden, hat sich als sehr vorteilhaft herausgestellt. Der Einsatz einer bestimmten Zusammensetzung kann im Hin blick auf die Ausnutzung der Schutz- und/oder Aktivgaswirkung auf das Werkstück, z.B. auch im Vorwärmbereich, im Hinblick auf die gewünschte Lötqualität oder im Hinblick auf andere Gesichtspunkte optimiert werden. Beispielsweise kann die Vorwärmung des Werkstücks oder die Aktivierung des Flussmittels mit einer anders zusammengesetzten Schutzgasatmosphäre durchgeführt werden als der eigentliche Lötvorgang.

Die Schutz- und/oder Aktivgasatmosphäre wird im Folgenden der Einfachheit und Kürze wegen nur noch Schutzgasatmosphäre genannt. Es sei jedoch an dieser Stelle ausdrücklich darauf hingewiesen, dass immer auch Aktivgas von dem Begriff umfasst wird.

Ein wesentlicher Vorteil der erfindungsgemäßen Vorrichtung besteht darin, dass sie eine Doppelnutzung des Schutzgases ermöglicht. Beipielsweise wird ein Inertgas, z.B. Stickstoff, das aus der Lötzone ausgetragen wird, in der weiteren Zone, z.B. beim Vorwärmen und/oder vorgeschaltetem Inertisieren des Werkstücks nochmal genutzt. Dieses Gas wäre ohne das erfindungsgemäße Gehäuse ohne weitere Nutzung in die Umgebung entwichen.

Gemäß einer besonders vorteilhaften Weiterbildung der Erfindung weist eine oder mehrere der weiteren Zonen jeweils eine eigene Einhausung auf, die zur Einhausung und Trennung der jeweiligen Schutz- und/oder Aktivgasatmosphäre der jeweiligen Zone vorgesehen ist. Damit kann jeden Zone mit einer für sie optimalen Schutzgasatmosphäre ausgestattet werden.

Besonders vorteilhaft ist die Einhausung unterhalb der Bahn des Werkstücks angebracht, wodurch sich eine Minimierung des einzuhausenden Volumens und damit auch eine Minimierung des Schutzgasbedarfs ergibt. Darüberhinaus wird hiermit auch die Zugänglichkeit der Lötzone verbessert und damit der Wartungsaufwand reduziert.

Bevorzugt sind Mittel zum Steuern und/oder Regeln der Zusammensetzungen der Schutzgasatmosphären vorgesehen. Dadurch ergeben sich sehr vorteilhaft getrennt einstell- und/oder regelbare Schutzgasatmosphären in den Bereichen der ersten und der zweiten Schutzgaszusammensetzung.

Gemäß einer weiteren vorteilhaften Ausgestaltung der vorliegenden Erfindung ist die Einhausung so ausgestaltet, dass die sich ausbildende Strömung der Schutzgasatmosphäre der ersten Zusammensetzung im wesentlichen parallel zur Oberfläche der Lötwelle verläuft.

Verfahrensseitig wird die gestellte Aufgabe dadurch gelöst, dass das Werkstück zusätzlich zur von der Einhausung umgebenen Lötzone zumindest noch eine weitere Zone passiert, wobei die Einhausung und mindestens eine weitere Zone durch ein Gehäuse von der Umgebung abgeschirmt werden und eine Schutz- und/oder Aktivgasatmosphäre einer zweiten Zusammensetzung in das Gehäuse eingebracht wird, wodurch das Werkstück nacheinander Schutz- und/oder Aktivgasatmosphären unterschiedlicher Zusammensetzungen passiert, wobei die Schutz- und/oder Aktivgasatmosphäre der ersten Zusammensetzung von der Schutz- und/oder Aktivgasatmosphäre der zweiten Zusammensetzung umgeben ist.

Gemäß einer besonders vorteilhaften Weiterbildung der Erfindung werden eine oder mehrere der weiteren Zonen und deren Schutz- und/oder Aktivgasatmosphären jeweils mit Hilfe einer eigenen Einhausung abgeschirmt.

Bevorzugt wird die sich beim Einbringen ausbildende Strömung der Schutzgasatmosphäre der ersten Zusammensetzung im wesentlichen parallel zur Oberfläche der Lötwelle geleitet.

Besonders bevorzugt werden als Schutz- und/oder Aktivgasatmosphären Inertgase oder Inertgasgemische eingesetzt, insbesondere Stickstoff oder stickstoffhaltige Inertgasgemische.

Gemäß einer vorteilhaften Weiterbildung der Erfindung wird eine Schutzgasatmosphäre der ersten Zusammensetzung eingesetzt, die toxische und/oder brennbare Gase enthält, insbesondere Wasserstoff. Insbesondere beim Einsatz von Wasserstoff ist es hier von Vorteil, dass zwei Schutzgasatmosphären unterschiedlicher Zusammensetzung Verwendung finden. Dadurch kann der Wasserstoffgehalt in der ersten Schutzgasatmosphäre z.B. höher gewählt werden, ohne dass in der restlichen Prozesszone, z.B. im Vorwärmbereich, der kritische Wert für die dort zulässige Wasserstoffkonzentration überschritten wird. Für Wasserstoff liegt dieser Wert in der Regel bei kleiner oder gleich 5% Wasserstoffanteil in der Schutzgasatmosphäre für die Schutzgasatmosphäre der zweiten Zusammensetzung.

Mit besonderem Vorteil wird eine Schutzgasatmosphäre der ersten Zusammensetzung eingesetzt, die mit flüssigem und/oder gasförmigem Flussmittel dotiert ist. Durch die erfindungsgemäße Trennung der Schutzgasatmosphären wird für diese vorteilhafte Ausgestaltung ein wesentlich reduzierter Verbrauch an Flussmittel ermöglicht.

Gemäß einer weiteren vorteilhaften Ausgestaltung der vorliegenden Erfindung wird eine Schutzgasatmosphäre der zweiten Zusammensetzung eingesetzt, die einen geringeren Anteil an Inertgas enthält als die Schutzgasatmosphäre der ersten Zusammensetzung.

Bevorzugt werden die Zusammensetzungen der Schutzgasatmosphären gesteuert und/oder geregelt.

Zusammenfassend seien im Folgenden einige der vielfältigen Vorteile der vorliegenden Erfindung dargestellt:

Die Erfindung ermöglicht eine bessere Ausnutzung des Inertgases, eine bessere Stabilisierung der Zusammensetzung der Schutzgasatmosphäre, besonders in der Lötzone sowie eine Optimierung der Zusammensetzungen der Schutzgasatmosphären in den einzelnen Prozesszonen, also beispielsweise im Vorwärmbereich, im Lötbereich und/oder in einem Abkühlungsbereich.

Desweiteren ermöglicht die vorliegende Erfindung eine vorteilhafte Optimierung des Inertgasverbrauchs als Funktion der erforderlichen Lötqualität.

Darüberhinaus wurde mit der Erfindung eine vorteilhafte Möglichkeit zum Einsatz brennbarer und/oder toxischer Gase oder Gasgemische, vor allem im Lötbereich gefunden. Es können auch Formiergas, reiner Wasserstoff und/oder gasförmiges Flussmittel problemlos eingesetzt werden.

Die Vorwärmung des Werkstücks und/oder die Aktivierung von Flussmittel kann vorteilhaft bei einer anders zusammengesetzten Schutzgasatmosphäre erfolgen als der eigentliche Lötvorgang.

Die vorliegende Erfindung ermöglicht auch die Dotierung der Schutzgasatmosphäre der ersten Zusammensetzung mit flüssigem und/oder gasförmigem Flussmittel, ohne dass nennenswerte Mengen aus der Gesamtanlage austreten. Die Schutzgasatmosphäre der zweiten Zusammensetzung weist dabei vorteilhaft eine gewisse Pufferwirkung auf.

Besonders vorteilhaft ist auch die Möglichkeit, einen gewünschten Wert für den Wärmeübergang in den einzelnen Bereichen der Prozesszone über den Anteil bestimmter Gase in der Zusammensetzung der einzelnen Schutzgasatmosphären einzustellen. Beispielsweise wird dazu der Anteil an Helium und/oder Wasserstoff in der Schutzgaszusammensetzung benutzt.

Die Schutzgasatmosphäre der ersten Zusammensetzung, also die Schutzgasatmosphäre im Lötbereich ist durch die vorliegende Erfindung unabhängiger von Einflüssen aus der Umgebung der Lötanlage geworden, da die Schutzgasatmosphäre der zweiten Zusammensetzung solche Einflüsse abpuffert.

Mit der Erfindung wird vorteilhaft eine optimale Inertgasausnutzung und ein optimales Inertgasregime erreicht. Der Inertgaseinsatz läßt sich nach der gewünschten Lötqualität planen. Es wird z.B. eine höhere Lötqualität bei geringerem Stickstoffeinsatz als bei einer herkömmlichen Tunnelmaschine zum Wellenlöten ermöglicht.

Die Strömungsrichtung der einzelnen Schutzgasatmosphären kann durch einfache Ausrichtung der Gasdiffusoren beeinflusst werden. Die Situation an den Öffnungen des Gehäuses zum Ein- und Ausbringen der Werkstücke ist vereinfacht, es kann z.T. ohne Schleusen und mit verminderter Absaugleistung für austretendes Schutzgas gearbeitet werden. Auch für den Wartungsaufwand ist eine vorteilhafte Verminderung zu erwarten.

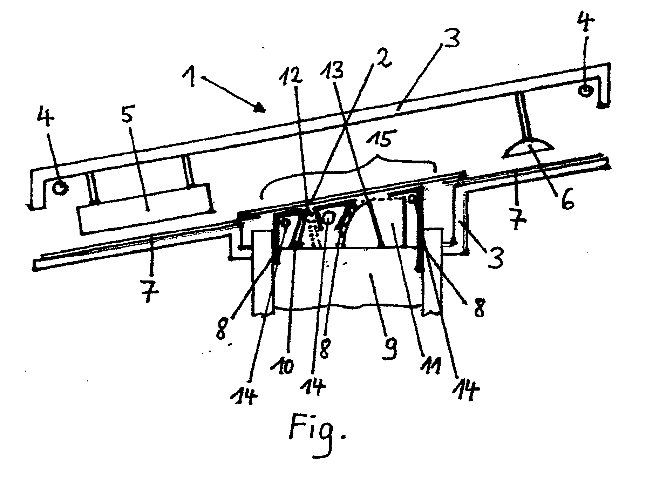

Die Erfindung sowie weitere Ausgestaltungen der Erfindung werden im Folgenden anhand des in der Figur dargestellten Ausführungsbeispiels näher erläutert.

Die Figur zeigt eine erfindungsgemäße Vorrichtung zum Wellenlöten mit Vorwärm- und Abkühlzone.

Im Einzelnen zeigt die Figur eine Vorrichtung 1 zum Wellenlöten eines Werkstücks 2. Die Vorrichtung 1 weist ein Gehäuse 3 mit Mitteln 4 zum Einbringen einer Schutzgasatmosphäre einer zweiten Zusammensetzung auf. Desweiteren zeigt die Figur eine Einrichtung 5 zum Vorwärmen des Werkstücks 2, eine Einrichtung 6 zum Abkühlen des Werkstücks 2 nach dem Lötvorgang und eine Löteinrichtung 15 zwischen den Einrichtungen 5 und 6, in der Lötwelle 10, 11 und das Lotreservoir 9 von einer Einhausung 8 umgeben sind. Das Werkstück 2 wird mit Hilfe von Mitteln 7 zum Bewegen des Werstücks 2 durch das Gehäuse 3 transportiert, das alle vorstehend genannten Komponenten umgibt.

Die für den Lötprozess notwendigen Lötwellenscheitel 12 und 13 bleiben in diesem Beispiel von der Einhausung 8 ausgespart und die Bahn, entlang derer das Werkstück 2 über die über dem Lotreservoir 9 erzeugten Lötwellen 10 und 11 transportiert wird, ist so gewählt, dass zumindest ein Teil des Werkstücks 2 mit den Lötwellenscheitel 12, 13 in Berührung kommt.

Die Einhausung 8 umfängt desweiteren Mittel 14 zum Einbringen einer Schutzgasatmosphäre einer.ersten Zusammensetzung. Es ergeben sich somit zwei Bereiche, nämlich innerhalb der Einhausung 8 und im Inneren des Gehäuses 3, die jeweils eine Schutzgasatmosphäre enthalten, deren Zusammensetzung (erste und zweite) in der Regel voneinander verschieden gewählt wird, so dass in den verschiedenen Prozesszonen verschiedene Schutzgasatmosphären vorhanden sind und auf das Werkstück und die Vorgänge z.B. des Vorwärmens (vgl. Bezugsziffer 5), den eigentlichen Lötvorgang (vgl. Bezugsziffern 8 bis 15) und den Abkühlvorgang (vgl. Bezugsziffer 6) einwirken.

Durch die in diesem Beispiel erwähnten Aussparungen in der Einhausung 8 wird auch nochmal die bereits erwähnte Pufferfunktion der Schutzgasatmosphäre der zweiten Zusammensetzung deutlich. Durch die Aussparungen entweicht ein bestimmter Anteil der Schutzgasatmosphäre der ersten Zusammensetzung. Durch das die Einhausung 8 umgebende Gehäuse 3 kann eine Entweichen an die Umgebung und Vermischen mit der Umgebungsluft verhindert werden, da der Anteil lediglich mit der Schutzgasatmosphäre der zweiten Zusammensetzung in Kontakt kommt und sich mit dieser Vermischen wird, wodurch eine zweite Nutzung dieses Anteils an Schutzgas ermöglicht wird. Das Verhindern des Kontaktes mit der Umgebungsluft kann auch im Falle von mit Luft reaktiven Schutzgaszusammen-setzungen von entscheidender Bedeutung im Hinblick auf deren sichere Einsetzbarkeit als Schutzgas der ersten Zusammensetzung sein.

Die beschriebenen vorteilhaften Ausgestaltungen durch Steuer- und/oder Regeleinrichtungen sind in diesem Ausführungsbeispiel nicht dargestellt. Es sei hier jedoch noch einmal betont, dass sie eine sehr wertvolle Ergänzung für die Praxis darstellen und ein gezieltes Erreichen bestimmter Schutzgasatmosphären wesentlich erleichtern.

## Patentansprüche

1. Vorrichtung (1) zum Wellenlöten von Werkstücken (2), die Mittel zum Bewegen des der Lötbehandlung zu unterziehenden Werkstücks (2) entlang einer bestimmten Bahn über mindestens eine über einem Lotreservoir (9) erzeugte Lötwelle (10, 11) aufweist, wobei sich über dem Lotreservoir (9) eine Schutz- und/oder Aktivgasatmosphäre einer ersten Zusammensetzung unter weitgehendem Ausschluss von Sauerstoff befindet, und wobei Mittel (14) zum Einbringen des Schutz- und/oder Aktivgases sowie eine Einhausung (8) vorgesehen sind, wobei die Einhausung (8) so ausgebildet ist, dass sie zumindest die wesentlichen Teile einer Lötzone (15), nämlich die Lötwelle (10, 11) und das Lotreservoir (9), zumindest zum Teil einhaust und wobei die Einhausung (8) so ausgebildet ist und die Bahn so verläuft, dass zumindest ein Teil des Werkstücks (2) zumindest mit einem Teil der Lötwelle (10, 11) in Berührung kommt, **dadurch gekennzeichnet, dass** zusätzlich zu der Lötzone (15) zumindest noch eine weitere Zone (5, 6) vorgesehen ist, in der das Werkstück (2) sich vor oder nach der Lötbehandlung zumindest für kurze Zeit befindet, wobei ein Gehäuse (3) vorgesehen ist, das die Einhausung (8) und mindestens die weitere Zone (5, 6) umgibt, und Mittel (4) zum Einbringen einer Schutz- und/oder Aktivgasatmosphäre einer zweiten Zusammensetzung in das Gehäuse (3) vorgesehen sind, wobei die Einhausung (8) die Schutz- und/oder Aktivgasatmosphäre der ersten Zusammensetzung umgibt und die Schutz- und/oder Aktivgasatmosphäre der zweiten Zusammensetzung die Einhausung (8) umgibt sowie das Gehäuse (3) die Einhausung (8) und die Schutz- und/oder Aktivgasatmosphäre der zweiten Zusammensetzung umgibt.

2. Vorrichtung (1) nach Anspruch 1, **dadurch gekennzeichnet, dass** eine oder mehrere der weiteren Zonen (5, 6) jeweils eine eigene Einhausung aufweisen, die zur Einhausung und Trennung der jeweiligen Schutz- und/oder Aktivgasatmosphäre der jeweiligen Zone (5, 6) vorgesehen ist.

3. Vorrichtung (1) nach Anspruch 1 oder 2, **dadurch gekennzeichnet, dass** die Einhausung (8) unterhalb der Bahn des Werkstücks (2) angebracht ist.

4. Vorrichtung (1) nach einem der Ansprüche 1 bis 3, **dadurch gekennzeichnet, dass** Mittel zum Steuern und/oder Regeln der Zusammensetzungen der Schutz- und/oder Aktivgasatmosphären vorgesehen sind.

5. Vorrichtung (1) nach einem der Ansprüche 1 bis 4, **dadurch gekennzeichnet, dass** die Einhausung (8) so ausgestaltet ist, dass die sich ausbildende Strömung der Schutz- und/oder Aktivgasatmosphäre der ersten Zusammensetzung im wesentlichen parallel zur Oberfläche der Lötwelle (10, 11) verläuft.

6. Verfahren zum Wellenlöten von Werkstücken (2), wobei das der Lötbehandlung zu unterziehende Werkstück (2) entlang einer bestimmten Bahn über mindestens eine über einem Lotreservoir (9) erzeugte Lötwelle (10, 11) bewegt wird, wobei über dem Lotreservoir (9) eine Schutz- und/oder Aktivgasatmosphäre einer ersten Zusammensetzung unter weitgehendem Ausschluss von Sauerstoff ausgebildet wird und wobei das eingebrachte Schutz- und/oder Aktivgas sowie zumindest das Lotreservoir (9) und die Lötwelle (10, 11) als wesentliche Teile der Lötzone (15) von einer Einhausung (8) zumindest zum Teil so abgeschirmt werden und die Bahn des Werkstücks (2) so geführt wird, dass zumindest ein Teil des Werkstücks (2) zumindest mit einem Teil der Lötwelle (10, 11) in Berührung kommt, **dadurch gekennzeichnet, dass** das Werkstück (2) zusätzlich zur von der Einhausung (8) umgebenen Lötzone (15) zumindest noch eine weitere Zone (5, 6) passiert, wobei die Einhausung (8) und mindestens die weitere Zone (5, 6) durch ein Gehäuse (3) von der Umgebung abgeschirmt werden und eine Schutz- und/oder Aktivgasatmosphäre einer zweiten Zusammensetzung in das Gehäuse (3) eingebracht wird, wodurch das Werkstück nacheinander Schutz- und/oder Aktivgasatmosphären unterschiedlicher Zusammensetzungen passiert, wobei die Schutz- und/oder Aktivgasatmosphäre der ersten Zusammensetzung von der Schutz- und/oder Aktivgasatmosphäre der zweiten Zusammensetzung umgeben ist.

7. Verfahren nach Anspruch 6, **dadurch gekennzeichnet, dass** eine oder mehrere der weiteren Zonen (5, 6) und deren Schutz- und/oder Aktivgasatmosphären jeweils mit Hilfe einer eigenen Einhausung abgeschirmt werden.

8. Verfahren nach Anspruch 6 oder 7, **dadurch gekennzeichnet, dass** die sich beim Einbringen ausbildende Strömung der Schutz- und/oder Aktivgasatmosphäre der ersten Zusammensetzung im wesentlichen parallel zur Oberfläche der Lötwelle (10, 11) geleitet wird.

9. Verfahren nach einem der Ansprüche 6 bis 8, **dadurch gekennzeichnet, dass** als Schutz- und/oder Aktivgasatmosphären Inertgase oder Inertgasgemische eingesetzt werden, insbesondere Stickstoff oder stickstoffhaltige Inertgasgemische.

10. Verfahren nach einem der Ansprüche 6 bis 9, **dadurch gekennzeichnet, dass** eine Schutz- und/oder Aktivgasatmosphäre der ersten Zusammensetzung eingesetzt wird, die toxische und/oder brennbare Gase enthält, insbesondere Wasserstoff, enthält und/oder mit flüssigem und/oder gasförmigem Flussmittel dotiert ist.

11. Verfahren nach einem der Ansprüche 6 bis 10, **dadurch gekennzeichnet, dass** eine Schutz- und/oder Aktivgasatmosphäre der zweiten Zusammensetzung eingesetzt wird, die einen geringeren Anteil an Inertgas enthält als die Schutzgasatmosphäre der ersten Zusammensetzung.

12. Verfahren nach einem der Ansprüche 6 bis 11, **dadurch gekennzeichnet, dass** die Zusammensetzungen der Schutz- und/oder Aktivgasatmosphären gesteuert und/oder geregelt werden.

## Claims

1. Device (1) for wave soldering workpieces (2), which comprises means for moving the workpiece (2) to be subjected to the soldering treatment along a defined path via at least one solder wave (10, 11) produced above a solder reservoir (9), wherein a protective and/or active gas atmosphere of a first composition is located above the solder reservoir (9) with substantial exclusion of oxygen, and wherein means (14) for introducing the protective and/or active gas and also a housing (8) are provided, wherein the housing (8) is designed such that it at least partially houses at least the essential parts of a soldering zone (15), specifically the solder wave (10, 11) and the solder reservoir (9), and wherein the housing (8) is designed and the path extends such that at least part of the workpiece (2) comes into contact at least with part of the solder wave (10, 11), **characterized in that** at least one further zone (5, 6), in which the workpiece (2) is located at least for a short time before or after the soldering treatment, is provided in addition to the soldering zone (15), wherein provision is made of a casing (3) which surrounds the housing (8) and at least the further zone (5, 6) and provision is made of means (4) for introducing a protective and/or active gas atmosphere of a second composition into the casing (3), wherein the housing (8) surrounds the protective and/or active gas atmosphere of the first composition and the protective and/or active gas atmosphere of the second composition surrounds the housing (8) and also the casing (3) surrounds the housing (8) and the protective and/or active gas atmosphere of the second composition.

2. Device (1) according to Claim 1, **characterized in that** one or a plurality of the further zones (5, 6) each comprise a separate housing which is provided for housing and separating the respective protective and/or active gas atmosphere in the respective zone (5, 6).

3. Device (1) according to Claim 1 or 2, **characterized in that** the housing (8) is mounted underneath the path of the workpiece (2).

4. Device (1) according to one of Claims 1 to 3, **characterized in that** means for controlling and/or regulating the compositions of the protective and/or active gas atmospheres are provided.

5. Device (1) according to one of Claims 1 to 4, **characterized in that** the housing (8) is configured such that the flow of the protective and/or active gas atmosphere of the first composition which forms runs substantially parallel to the surface of the solder wave (10, 11) .

6. Method for wave soldering workpieces (2), wherein the workpiece (2) to be subjected to the soldering treatment is moved along a defined path, via at least one solder wave (10, 11) produced above a solder reservoir (9), wherein a protective and/or active gas atmosphere of a first composition is formed above the solder reservoir (9) with substantial exclusion of oxygen, and wherein the protective and/or active gas introduced and also at least the solder reservoir (9) and the solder wave (10, 11), as essential parts of the soldering zone (15), are at least partially shielded by a housing (8) and the path of the workpiece (2) is routed such that at least part of the workpiece (2) comes into contact at least with part of the solder wave (10, 11), **characterized in that** the workpiece (2) passes through at least one further zone (5, 6) in addition to the soldering zone (15) surrounded by the housing (8), wherein the housing (8) and at least the further zone (5, 6) are shielded from the surroundings by a casing (3) and a protective and/or active gas atmosphere of a second composition is introduced into the casing (3), as a result of which the workpiece successively passes through protective and/or active gas atmospheres of different compositions, wherein the protective and/or active gas atmosphere of the first composition is surrounded by the protective and/or active gas atmosphere of the second composition.

7. Method according to Claim 6, **characterized in that** one or a plurality of the further zones (5, 6) and the protective and/or active gas atmospheres thereof are each shielded with the aid of a separate housing.

8. Method according to Claim 6 or 7, **characterized in that** the flow of the protective and/or active gas atmosphere of the first composition which forms as the latter is introduced is conducted substantially parallel to the surface of the solder wave (10, 11).

9. Method according to one of Claims 6 to 8, **characterized in that** the protective and/or active gas atmospheres used are inert gases or inert gas mixtures, in particular nitrogen or nitrogen-containing inert gas mixtures.

10. Method according to one of Claims 6 to 9, **characterized in that** use is made of a protective and/or active gas atmosphere of the first composition which contains toxic and/or combustible gases, in particular hydrogen, and/or is doped with liquid and/or gaseous flux.

11. Method according to one of Claims 6 to 10, **characterized in that** use is made of a protective and/or active gas atmosphere of the second composition which contains a smaller proportion of inert gas than the protective gas atmosphere of the first composition.

12. Method according to one of Claims 6 to 11, **characterized in that** the compositions of the protective and/or active gas atmospheres are controlled and/or regulated.

## Revendications

1. Dispositif (1) de soudage de pièces (2) à la vague qui présente des moyens qui déplacent la pièce (2) qui doit subir le traitement de brasage le long d'une piste définie au-dessus d'au moins une vague de brasage (10, 11) formée au-dessus d'un réservoir (9) de brasure,
une atmosphère de gaz de protection et/ou de gaz actif d'une première composition étant formée au-dessus du réservoir (9) de brasure en excluant largement l'oxygène, des moyens (14) d'amenée du gaz de protection et/ou du gaz actif ainsi qu'une enceinte (8) étant prévus,
l'enceinte (8) étant configurée de manière à enfermer au moins en partie au moins les parties essentielles d'une zone (15) de brasage, c'est-à-dire la vague (10, 11) de brasage et le réservoir (9) de brasure,
l'enceinte (8) étant configurée et la piste s'étendant de telle sorte qu'au moins une partie de la pièce (2) entre en contact avec au moins une partie de la vague (10, 11) de brasage,
**caractérisé en ce que**
en plus de la zone de brasage (15), encore au moins une autre zone (5, 6) dans laquelle la pièce (2) est située au moins pendant une courte durée avant ou après le traitement de brasage, un caisson (3) qui entoure l'enceinte (8) et au moins la zone supplémentaire (5, 6) est prévu,
**en ce que** des moyens (4) d'amenée d'une atmosphère de gaz de protection et/ou de gaz actif d'une deuxième composition sont prévus dans le caisson (3),
**en ce que** l'enceinte (8) entoure l'atmosphère de gaz de protection et/ou de gaz actif de la première composition,
**en ce que** l'atmosphère de gaz de protection et/ou de gaz actif de la deuxième composition entoure l'enceinte (8) et
**en ce que** le caisson (3) entoure l'enceinte (8) et l'atmosphère de gaz de protection et/ou de gaz actif de la deuxième composition.

2. Dispositif (1) selon la revendication 1, **caractérisé en ce qu'**une ou plusieurs des autres zones (5, 6) présentent leur enceinte propre qui est prévue pour enfermer et séparer l'atmosphère de gaz de protection et/ou de gaz actif de chaque zone (5, 6).

3. Dispositif (1) selon les revendications 1 ou 2, **caractérisé en ce que** l'enceinte (8) est placée en dessous de la piste de la pièce (2).

4. Dispositif (1) selon l'une des revendications 1 à 3, **caractérisé en ce qu'**il présente des moyens de commande et/ou de régulation de la composition des atmosphères de gaz de protection et/ou de gaz actif.

5. Dispositif (1) selon l'une des revendications 1 à 4, **caractérisé en ce que** l'enceinte (8) est configurée de telle sorte que l'écoulement formé d'atmosphère de gaz de protection et/ou de gaz actif de la première composition s'étend essentiellement en parallèle à la surface de la vague de brasage (10, 11).

6. Procédé de soudage de pièces (2) à la vague, dans lequel la pièce (2) qui doit subir le traitement de brasage est déplacée le long d'une piste définie au-dessus d'au moins une vague de brasage (10, 11) formée au-dessus d'un réservoir (9) de brasure,
une atmosphère de gaz de protection et/ou de gaz actif d'une première composition étant formée au-dessus du réservoir (9) de brasure en excluant largement l'oxygène, le gaz de protection et/ou le gaz actif apportés ainsi qu'au moins le réservoir (9) de brasure et l'onde de brasage (10, 11), qui constituent les parties essentielles de la zone de brasage (15) étant enfermés au moins en partie par une enceinte (8) et
la piste de la pièce (2) s'étendant de telle sorte qu'au moins une partie de la pièce (2) entre en contact avec au moins une partie de la vague de brasage (10, 11),
**caractérisé en ce que**
en plus de passer dans la zone de brasage (15) entourée par l'enceinte (8), la pièce (2) traverse encore au moins une autre zone (5, 6),
**en ce que** l'enceinte (8) et au moins l'autre zone (5, 6) sont séparées de l'environnement par un caisson (3),
**en ce qu'**une atmosphère de gaz de protection et/ou de gaz actif d'une deuxième composition est apportée dans le caisson (3) de sorte que la pièce traverse successivement des atmosphères de gaz de protection et/ou de gaz actif de compositions différentes et
**en ce que** l'atmosphère de gaz de protection et/ou de gaz actif de la première composition est entourée par l'atmosphère de gaz de protection et/ou de gaz actif de la deuxième composition.

7. Procédé selon la revendication 6, **caractérisé en ce qu'**une ou plusieurs des autres zones (5, 6) et de gaz actif et/ou de gaz de protection sont toutes fermées au moyen d'une enceinte propre.

8. Procédé selon les revendications 6 ou 7, **caractérisé en ce que** l'écoulement d'atmosphère de gaz de protection et/ou de gaz actif de la première composition qui se forme lors de l'amenée est amené essentiellement en parallèle à la surface de la vague de brasage (10, 11).

9. Procédé selon l'une des revendications 6 à 8, **caractérisé en ce qu'**il utilise comme atmosphères de gaz de protection et/ou de gaz actif des gaz inertes ou des mélanges de gaz inertes, en particulier de l'azote ou des mélanges de gaz inertes contenant de l'azote.

10. Procédé selon l'une des revendications 6 à 9, **caractérisé en ce qu'**il utilise une atmosphère de gaz de protection et/ou de gaz actif de la première composition qui contient des gaz toxiques et/ou combustibles, en particulier de l'hydrogène et/ou qui est dopée par des fondants liquides et/ou gazeux.

11. Procédé selon l'une des revendications 6 à 10, **caractérisé en ce qu'**il utilise une atmosphère de gaz de protection et/ou de gaz actif de la deuxième composition qui contient une plus petite teneur en gaz inerte que l'atmosphère de gaz de protection de la première composition.

12. Procédé selon l'une des revendications 6 à 11, **caractérisé en ce que** les compositions des atmosphères de gaz de protection et/ou de gaz actif sont contrôlées et/ou régulées.
